# EUROPÄISCHE PATENTANMELDUNG

(11) **EP 1 741 525 A1**
(43) Veröffentlichungstag der Anmeldung: **10.01.2007**
(21) Anmeldenummer: 05014607.5
(22) Anmeldetag: 06.07.2005
(51) Int. Cl.: B26D 7/20

(54) **Vorrichtung zur Aufnahme von plattenförmigen Materialien**

(71) Anmelder: TRUMPF Werkzeugmaschinen GmbH + Co. KG, 71254 Ditzingen (DE)
(72) Erfinder: Kilian, Friedrich, 71229 Leonberg (DE); Blaser, Martin, 88267 Vogt (DE)
(74) Vertreter: Maser, Jochen

(57) **Zusammenfassung**

Die Erfindung betrifft eine Vorrichtung zur Aufnahme von plattenförmigen Materialien (12) für zumindest einen Trennvorgang im plattenförmigen Material (12) mit einer Trenneinrichtung (14), wobei die Trennvorrichtung (14) während eines Trennvorganges zumindest in X-Richtung bewegbar ist und quer dazu in Y-Richtung eine Vorschubrichtung des plattenförmigen Materials (12) vorgesehen ist, mit einem ersten Auflagetisch (17), der eine erste Auflagefläche (23) aufweist und zumindest einem zweiten Auflagetisch (18), der eine zweite Auflagefläche (23) aufweist, wobei jeder der Auflagetische (17, 18) ein separat angetriebenes Transportband (21) umfasst, das von mehreren Walzen (22, 24, 26) geführt ist und zwischen zumindest zwei zueinander beabstandeten und in einer Ebene liegenden Walzen (22, 26) die Auflagefläche (23) gebildet ist, wobei die Auflagefläche (23) des ersten Auflagetisches (23) und die Auflagefläche (22) des zweiten Auflagetisches (18) durch einen Spalt (19) voneinander beabstandet sind, der sich unter der Trenneinrichtung (14) befindet, wobei die zumindest zwei Walzen (22, 26), welche die Auflagefläche (23) des ersten und zweiten Auflagetisches (17, 18) begrenzen, unabhängig voneinander in und entgegen der Y-Richtung verfahrbar sind.

## Beschreibung

Die Erfindung betrifft eine Trennvorrichtung zur Aufnahme von plattenförmigen Materialien für zumindest einen Trennvorgang im plattenförmigen Material mit einer Trenneinrichtung gemäß dem Oberbegriff des Anspruchs 1.

Aus der JP 61206586 A ist eine Vorrichtung zur Aufnahme von plattenförmigen Materialien bekannt. Während eines Trennvorganges im plattenförmigen Material durch eine Trenneinrichtung wird diese in X-Richtung bewegt. Eine Vorschubrichtung des plattenförmigen Materials ist in Y-Richtung vorgesehen, die quer zur X-Richtung verläuft. Diese Vorrichtung umfasst einen ersten Auflagetisch, der eine erste Auflagefläche aufweist sowie einen zweiten Auflagetisch, der eine zweite Auflagefläche umfasst. Zwischen der ersten und zweiten Auflagefläche der Auflagetische ist ein Spalt ausgebildet, so dass ein Strahl der Trenneinrichtung durch diesen Spalt hindurchführbar ist. Jeder der Arbeitstische umfasst ein Transportband, das jeweils mit einem Motor angetrieben ist. Zwischen zwei in einer Ebene liegenden Walzen eines Auflagetisches ist die Auflagefläche zur Aufnahme des plattenförmigen Materials vorgesehen. Zur Positionierung des plattenförmigen Materials entlang der Y-Richtung sind zusätzlich Greifer vorgesehen, die zur Beförderung des plattenförmigen Materials vorgesehen sind. Der Spalt zwischen den beiden Auflageflächen ist ortsfest zu den Auflagetischen und zur Trenneinrichtung vorgesehen. Eine analoge Anordnung ist aus der GB 1 287 585 bekannt.

Diese Vorrichtungen weisen den Nachteil auf, dass die Lage des Spaltes als auch die Spaltbreite nicht veränderbar ist. Darüber hinaus ist ein solches starres System für die Einbindung in einen automatischen Prozess ungeeignet oder bedarf kostenintensive Zusatzmodule zum Be- und Entladen einer solchen Vorrichtung mit plattenförmigem Material.

Aus der WO 03/016004 ist eine Auflagevorrichtung zum Lagern von plattenförmigen Materialien bekannt geworden, die eine erste und eine zweite Auflagefläche zum Aufnehmen eines mit einer Trenneinrichtung zu bearbeitenden Werkstücks aufweist. Unterhalb der Trenneinrichtung ist ein Spalt vorgesehen, der die erste Auflagefläche zur zweiten Auflagefläche trennt. Zur Positionierung und Einstellung des Spaltes ist eine Gliederkette vorgesehen, deren jeweiligen freien Enden in einem Rahmen der Vorrichtung zur Auflage von plattenförmigem Material eingespannt sind. Von einem Einspannpunkt an der Vorrichtung erstreckt sich die Gliederkette bis zu einer an einem Tragarm angeordneten Umlenkrolle und bildet die erste Auflagefläche. Der Tragarm ist nahe dem Einspannpunkt an der Vorrichtung fixiert. Die Gliederkette wird über mehrere weitere Umlenkrollen zu einer zweiten, an einem weiteren am Tragarm angeordneten Umlenkrolle geführt. Von der zweiten am weiteren Tragarm angeordneten Rolle führt die Gliederkette unter Bildung einer zweiten Auflagefläche zu einer endseitigen Einspannung der Vorrichtung. Diese Auflagevorrichtung weist eine einzige Gliederkette auf, die jeweils endseitig eingespannt ist. Eine solche Vorrichtung ist für die automatische Handhabung ungeeignet, da diese eine Stillstandszeit der Trenneinrichtung für das Be- und Entladen von plattenförmigen Materialien erfordert, um das plattenförmige Material auf dem Auflagetisch zu positionieren oder zu entnehmen.

Der Erfindung liegt deshalb die Aufgabe zugrunde, eine Vorrichtung zur Aufnahme von plattenförmigen Materialien für zumindest einen Trennvorgang im plattenförmigen Material mit einer Trenneinrichtung zu schaffen, die eine hohe Flexibilität für die Bearbeitung des plattenförmigen Materials aufweist und eine flexible Einbindung in einen Automatisierungsprozess, insbesondere zum Be- und Entladen, ermöglicht.

Diese Aufgabe wird erfindungsgemäß durch eine Vorrichtung gemäß den Merkmalen des Anspruchs 1 gelöst. Vorteilhafte Ausgestaltungen der Erfindung sind in den weiteren Ansprüchen angegeben.

Diese Vorrichtung weist den Vorteil auf, dass durch die unabhängige Ansteuerung der Walzen, die die Auflagefläche begrenzen und bestimmen, sowohl für die Lage des Spaltes während der Bearbeitung des plattenförmigen Materials im Arbeitsbereich der Trenneinrichtung veränderbar als auch unabhängig davon die Spaltbreite variabel ist. Die Änderung der Spaltbreite kann einer Änderung der Lage des Spaltes oder umgekehrt überlagert sein. Darüber hinaus kann die Auflagefläche in der Größe variiert werden. Zusätzlich wird ermöglicht, dass die Auflagefläche des Auflagetisches in eine Be- und Entladeposition unabhängig von der Positionierung des Arbeitsspaltes innerhalb eines Arbeitsbereiches der Vorrichtung überführbar ist. Diese Flexibilität wird durch die verfahrbare Anordnung der Walzen ermöglicht, die die Größe und Lage der Auflagefläche bestimmen als auch durch Auflagetische, die jeweils separate Transportbänder umfassen.

Nach einer vorteilhaften Ausgestaltung der Erfindung ist vorgesehen, dass zumindest eine weitere, das Transportband führende Walze in einer Raumrichtung verfahrbar ist. Diese zumindest eine weitere Walze dient als Ausgleichswalze, um die Veränderung des Abstandes zwischen den in einer Ebene liegenden Walzen auszugleichen, die die Größe der Auflagefläche bestimmen. Diese zumindest eine weitere Walze kann als sogenannte Tänzerwalze oder Spannwalze ausgebildet werden, die durch eine Kraftbeaufschlagung entlang einer Richtung verfahrbar ist, um auf das Transportband eine Bahnspannung aufzubringen.

Bevorzugt ist vorgesehen, dass die zumindest eine weitere Walze zum Ausgleich der Größe der Auflagefläche in einer Z-Richtung rechtwinklig zur Y-Richtung und/oder in Y-Richtung verfahrbar ist. In Abhängigkeit des zur Verfügung stehenden Bauraumes kann die Bewegungsrichtung gewählt werden. Beispielsweise kann durch eine Ausgleichsrichtung zur Bewegung der zumindest einen weiteren Walze parallel zur Ebene der Auflagefläche ermöglicht sein, dass besonders lange Auflageflächen eingestellt werden können. Des Weiteren wird dadurch das Positionieren der Auflagefläche in einer Be- und Entladestation ermöglicht.

Eine dem Spalt zugeordnete Walze des ersten Auflagetisches und eine dem Spalt zugeordnete Walze des zweiten Auflagetisches sind bevorzugt zur Einstellung einer Spaltbreite relativ zu einander verfahrbar vorgesehen. Dadurch lassen sich in Abhängigkeit von Bearbeitungsparametern der Trenneinrichtung als auch der Bearbeitungsaufgabe für Gutteile unterschiedliche Spaltbreiten einstellen. Beispielsweise in Abhängigkeit der Bearbeitungsdicke des plattenförmigen Materials kann die Spaltbreite für den Materialaustrieb angepasst sein. Des weiteren kann die Spaltbreite für das Entladen der Gutteile und Restteile durch den Spalt eingestellt werden als auch für den Abtransport über die Auflagefläche.

Nach einer weiteren vorteilhaften Ausgestaltung der Erfindung ist vorgesehen, dass eine Lage des zwischen dem ersten und zweiten Auflagetisch gebildeten Spaltes innerhalb eines Arbeitsbereiches der Trenneinrichtung veränderbar ist. Dadurch kann die Trenneinrichtung, die sowohl in X- als auch Y-Richtung verfahrbar ist, eingesetzt werden, wobei der Spalt zwischen den Auflageflächen in Y-Richtung einstellbar ist und der Trenneinrichtung folgt.

Bevorzugt wird zum Be- oder Entladen des plattenförmigen Materials eine dem Spalt entfernt liegende, der Auflagefläche zugeordnete Walze des ersten oder zweiten Auflagetisches in eine Be- und Entladeposition verfahren. Dadurch wird ermöglicht, dass insbesondere während einer Bearbeitung des plattenförmigen Materials in einen Arbeitsbereich der Trenneinrichtung gleichzeitig eine Be- und Entladung erfolgen kann. Durch die vergrößerte Auflagefläche, die über den Arbeitsbereich hinausgeht, kann beispielsweise über eine Handhabungseinrichtung, insbesondere ein Saugsystem, ein neu zu bearbeitendes plattenförmiges Material zugeführt oder ein bearbeitetes plattenförmiges Material entnommen werden.

Nach einer ersten Ausführungsform der Erfindung ist für die Bearbeitung des plattenförmigen Materials vorgesehen, dass das Transportband der Auflagetische stillsteht und die dem Spalt zugeordneten Walzen eines jeden Auflagetisches bevorzugt zur Aufrechterhaltung einer vorbestimmten Spaltbreite synchron bewegt werden, wobei der Arbeitsspalt in Abhängigkeit der Position der Trenneinrichtung in Y-Richtung wandert. Dabei bleibt das plattenförmige Material in einer Ruhelage, und der Spalt wandert gleichzeitig unterhalb des plattenförmigen Materials zur aktuellen Bearbeitungsposition der Trenneinrichtung. Gleichzeitig kann eine Änderung in der Spaltbreite überlagert sein.

Nach einer alternativen Ausführungsform ist zur Bearbeitung des plattenförmigen Materials vorgesehen, dass das Transportband vom ersten und zweiten Arbeitstisch synchron in oder entgegen der Y-Richtung rotierend angetrieben ist, so dass das plattenförmige Material relativ zum Spalt bewegt wird. Zusätzlich kann der Spalt selbst innerhalb des Arbeitsbereiches verfahren werden.

Eine weitere vorteilhafte Ausführungsform der Erfindung sieht vor, dass die erste und zumindest eine weitere Auflagefläche durch eine Vielzahl von parallel zueinander angeordneten einzelnen Transportbändern gebildet ist. Eine solche Ausgestaltung weist den Vorteil auf, dass ein modularer Aufbau zur Erzielung unterschiedlich breiter Auflageflächen erzielt wird.

Die aus einer Vielzahl von parallel zueinander angeordneten und einzelnen Transportbändern gebildete Auflagefläche sind in einem Abstand zueinander angeordnet. Dadurch können nicht nur in X-Richtung, sondern auch in Y-Richtung Spalte zur Bearbeitung ausgebildet werden.

Eine weitere vorteilhafte Ausgestaltung der Auflagefläche, die eine Vielzahl von parallel zueinander angeordneten einzelnen Transportbänder umfasst, die zueinander beabstandet sind, ist durch dazwischen liegende Transportbänder vorgesehen, welche eine Auflagefläche umfassen, die sich zumindest innerhalb des Arbeitsbereiches der Trenneinrichtung erstreckt. Dadurch kann innerhalb des Arbeitsbereiches der Trenneinrichtung eine vollflächige Auflagefläche ausgebildet sein. Darüber hinaus ist durch die Anordnung der weiteren einzelnen Transportbänder ermöglicht, dass diese in eine Be- und Entladeposition verfahrbar sind, wobei durch die Beabstandung der einzelnen Transportbänder ermöglicht ist, dass Be- und Entladevorrichtungen, die rechen- oder gabelförmig ausgebildet sind, zum Be- und Entladen in den Freiräumen zwischen den einzelnen zueinander beabstandeten Transportbänder positionierbar sind. Dadurch ist auch ermöglicht, dass die erfindungsgemäße Vorrichtung bei bestehenden Anlagen nachrüstbar ist.

Zum Zuführen und Abführen des plattenförmigen Materials in und aus dem Arbeitsbereich ist vorzugsweise vorgesehen, dass zumindest ein Transportband der beiden Arbeitstische angetrieben ist. Ein solcher Motor kann an einer verfahrbaren Walze als auch an einer ortsfesten Walze vorgesehen sein, die an dem Transportband zum Antrieb angreift. Durch einen solchen Motor wird eine Vorschubbewegung erzielt, um zumindest die Be- und Entladefunktion zu ermöglichen.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer erfindungsgemäßen Vorrichtung mit einem ersten und einem zweiten Auflagetisch,
- Figur 2: eine schematische Seitenansicht der erfindungsgemäßen Vorrichtung gemäß Figur 1 beim Be- und Entladen des plattenförmigen Materials,
- Figur 3: eine schematische Seitenansicht der erfindungsgemäßen Vorrichtung gemäß Figur 1 beim Be- und Entladen mit einem Arbeitstisch in einer Be- und Entladeposition,
- Figur 4: eine schematische Darstellung eines beispielhaften Arbeitsschrittes der erfindungsgemäßen Vorrichtung gemäß Figur 1,
- Figur 5a, b: schematische Seitenansichten der alternativen Ausführungsformen der erfindungsgemäßen Vorrichtung,
- Figur 6a: eine schematische Seitenansicht einer alternativen Ausführungsform der Vorrichtung zu Figur 1 und
- Figur 6b: eine schematische Draufsicht auf die alternative Ausführungsform gemäß Figur 6a.

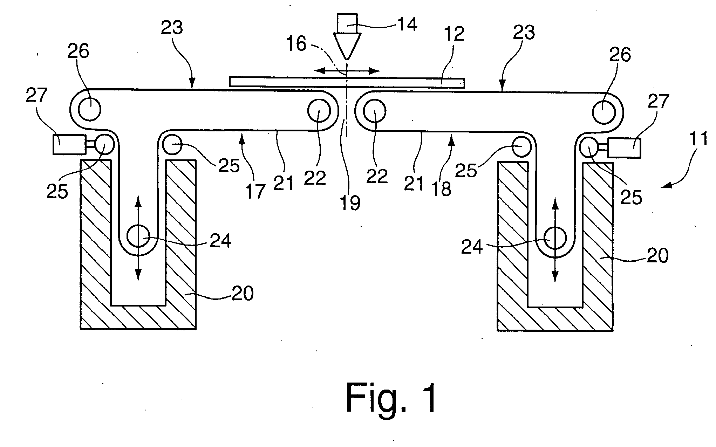

In Figur 1 ist eine schematische Seitenansicht einer erfindungsgemäßen Vorrichtung 11 dargestellt. Eine solche Vorrichtung 11 dient zur Aufnahme von plattenförmigem Material 12, das durch eine Trenneinrichtung 14, von der beispielhaft nur ein Trenn- oder Schneidkopf dargestellt ist, bearbeitet wird. Von dem Trenn- oder Schneidkopf der Trenneinrichtung 14 wird ein Strahl 16 zum plattenförmigen Material 12 geführt. Dieser Strahl 16 kann als elektromagnetische Strahlung, insbesondere als Laserstrahl, als Wasserstrahl oder dergleichen vorgesehen sein. Die Vorrichtung 11 umfasst zwei Auflagetische 17, 18, zwischen denen ein Spalt 19 gebildet ist. Die Auflagetische 17, 18 weisen jeweils ein getrennt voneinander angeordnetes Transportband 21 auf, das durch mehrere Walzen 22, 24, 25, 26 geführt und gespannt ist. Zwischen zwei in einer Ebene liegenden Walzen 22, 26 ist eine Auflagefläche 23 für das plattenförmige Material 12 gebildet. Die Auflagetische 17, 18 können jeweils an einem symbolisch dargestellten Grundgestell 20 oder an einem gemeinsamen Grundgestell vorgesehen sein.

Die Trenneinrichtung 14 ist während der Bearbeitung des plattenförmigen Materials 12 entlang des Spaltes 19 in X-Richtung verfahrbar. Des Weiteren kann die Trenneinrichtung 14 in und entgegen einer Vorschubrichtung des plattenförmigen Materials 12 verfahrbar sein, die der Y-Richtung entspricht. Ein Arbeitsbereich der Trenneinrichtung 14 ist durch die maximale Verfahrstrecke des Trenn- oder Schneidkopfes in X-Richtung und in Y-Richtung bestimmt, sofern die Trenneinrichtung 14 eine Verfahrbarkeit in Y-Richtung umfasst. Zur Bearbeitung des plattenförmigen Materials 12 ist vorgesehen, dass der Spalt 19 unterhalb der Trenneinrichtung 14 positioniert ist. Die dem Spalt 19 zugeordneten Walzen 22 können während der Bearbeitung des plattenförmigen Materials 12 bevorzugt synchron zur Aufrechterhaltung der Spaltbreite innerhalb eines Arbeitsbereiches der Trenneinrichtung 14 bewegt werden. Dabei kann das plattenförmige Material 12 ortsfest zum ersten und zweiten Auflagetisch 17, 18 positioniert bleiben beziehungsweise ruhend im Arbeitsbereich vorgesehen sein. Zusätzlich kann durch den Antrieb der Transportbänder 21 die Bewegung des plattenförmigen Materials 12 in Y-Richtung überlagert sein.

Sobald die Lage des Spaltes 19 innerhalb des Arbeitsbereiches verändert wird, wandert eine dem Spalt 19 zugeordnete Walze 22 in einer Ebene parallel zur Auflagefläche 23. Die Veränderung in der Größe der Auflagefläche 23 wird durch zumindest eine weitere Walze 24 ausgeglichen, die beispielsweise gemäß Figur 1 in Z-Richtung auf- und abbewegbar ist. Diese Walze 24 kann als Tänzerwalze oder Spannwalze ausgebildet sein, um zumindest der Bewegung der Walze 22 nachzulaufen.

Das Transportband 21 wird durch zumindest eine Umlenkrolle 25 geführt. Zumindest eine der Umlenkrollen 25 kann durch einen Motor 27 angetrieben sein, um das Transportband 21 in und entgegen der Vorschubrichtung beziehungsweise Y-Richtung zu bewegen.

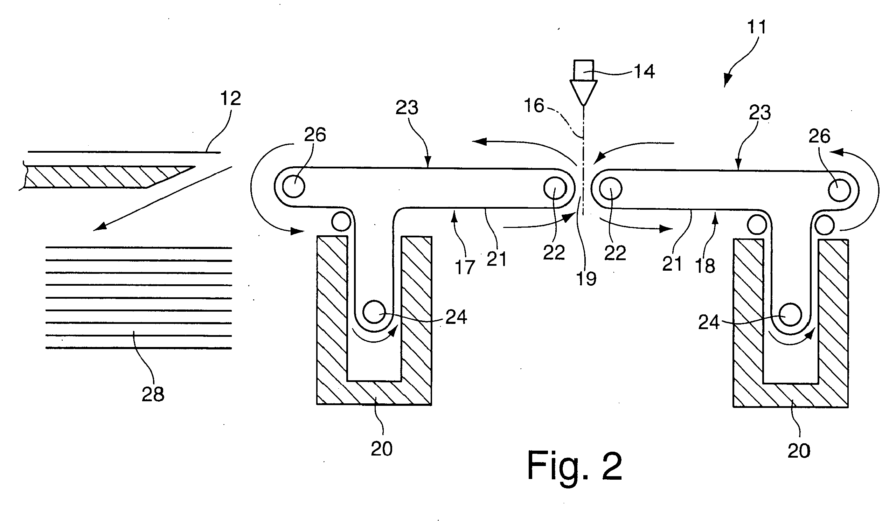

Zum Entladen des zu bearbeiteten plattenförmigen Materials 12 können die Transportbänder 21 angetrieben werden, so dass das bearbeitete plattenförmige Material 12 aus dem Arbeitsbereich der Trenneinrichtung 14 heraustransportiert wird. Eine solche Ausführungsform ist beispielhaft in Figur 2 dargestellt. Der Spalt 19 verbleibt innerhalb des Arbeitsbereiches und durch den Antrieb der Transportbänder 21 wird das bearbeitete Plattenmaterial 12 auf einem Stapel 28 abgelegt. Anschließend kann ein unbearbeitetes plattenförmiges Material 12 über eine Handhabungseinrichtung oder beispielsweise eine Rutsche zugeführt werden, wobei das Transportband 12 in Y-Richtung angetrieben wird, um dieses zum Spalt 19 für die weiteren Bearbeitungsschritte zu positionieren. Bei der in Figur 2 dargestellten Ausführungsform verbleibt die Walze 26 in einer Ruhelage, und das Be- und Entladen erfolgt über angetriebene Transportbänder 12.

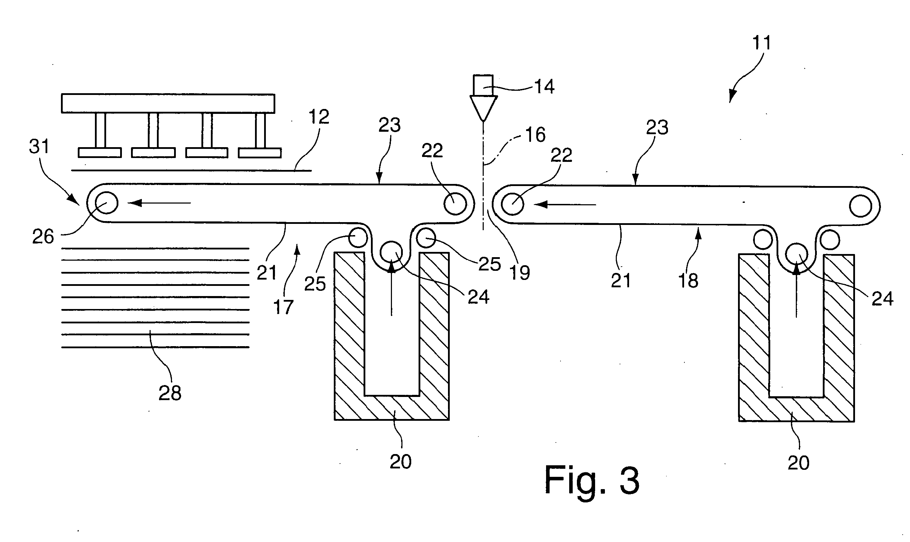

In Figur 3 ist eine alternative Vorgehensweise zum Be- und Entladen des plattenförmigen Materials 12 dargestellt. Durch die in einer Ebene parallel zur Auflagefläche 23 bewegbaren Walzen 22, 26 ist ermöglicht, dass das bearbeitete plattenförmige Material 12 aus dem Arbeitsbereich der Trenneinrichtung 14 heraustransportiert wird und die dem Spalt 19 entfernt liegende Walze 26 in eine Be- und Entladeposition 31 verfahren wird. Zusätzlich kann das Transportband 21 angetrieben sein, um das bearbeitete plattenförmige Material 12 zum Entladen in eine äußere Position entfernt vom Spalt 19 zu positionieren. In dieser Ent- und Beladeposition 31 können Handhabungseinrichtungen, wie beispielsweise ein Saugsystem, das bearbeitete plattenförmige Material 12 von der Auflagefläche 23 abheben. Dieses Handhabungssystem kann nun in eine benachbarte Position zur Auflagefläche 23 übergeführt werden, um das bearbeitete plattenförmige Material 12 beispielsweise auf einem Stapel abzulegen. Gleichzeitig kann ein zweites Handhabungssystem ein unbearbeitetes plattenförmiges Material 12 auf der in der Be- und Entladeposition 31 angeordneten Auflagefläche 23 des Auflagetisches 17 positionieren. Alternativ zu dieser Handhabung ist ermöglicht, dass die dem Spalt 19 entfernt liegende Walze 26 zunächst bis zum Stapel 28 der bearbeiteten plattenförmigen Materialien 12 positioniert wird, um anschließend durch den Antrieb des Transportbandes 21 ein Entladen des bearbeiteten plattenförmigen Materials 12 zu bewirken. Anschließend wird die Walze 26 in die Be- und Entladeposition 31 übergeführt, um ein neues plattenförmiges Material 12 auf der Auflagefläche 23 des Auflagetisches 17 abzulegen. Benachbart zum Stapel 28 kann auch zumindest ein weiterer Stapel mit plattenförmigem Material vorgesehen sein. Solche zueinander benachbarte Stapel können Rohmaterialien mit unterschiedlichen Geometrien und/oder Materialien umfassen als auch bearbeitete plattenförmige Materialien, wobei deren Zuordnung zur Auflagefläche 23 anwendungsspezifisch vorgesehen sein kann.

Durch die in der Ebene parallel zur Auflagefläche 23 bewegbaren Walzen 22 ist eine Verschiebung der Auflagefläche 23 und gegebenenfalls des Spaltes 19, eine Veränderung in der Größe der Auflagefläche 23 sowie ein Antrieb des Transportbandes 21 ermöglicht, wodurch eine hohe Flexibilität in der Auswahl und Ausgestaltung der Bearbeitungssituationen ermöglicht ist.

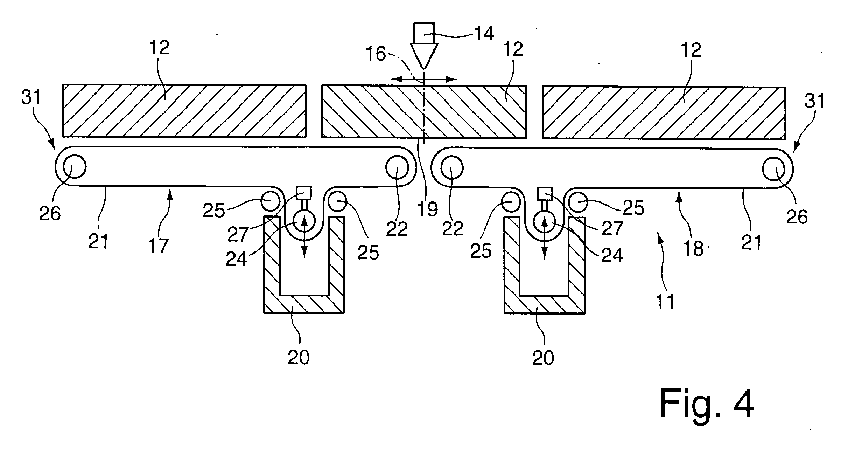

In Figur 4 ist beispielsweise eine Bearbeitungssituation dargestellt, bei der während dem Beladen von zu bearbeitendem plattenförmigen Material 12 und dem Entladen von bearbeitetem plattenförmigen Material 12 eine Bearbeitung eines sich im Arbeitsbereich der Trenneinrichtung 14 befindlichen plattenförmigen Material 12 erfolgt. Durch die dem Spalt 19 zugeordneten Walzen 22, die in Y-Richtung unter der Trenneinrichtung 14 verfahrbar sind, verbleibt das zu bearbeitende Material 12 in Ruhe im Arbeitsbereich und eine vollständige Bearbeitung ist ermöglicht. Durch die in eine Be- und Entladeposition 31 bewegbaren Walzen 26 ist ermöglicht, dass sich die Auflagefläche 23 aus dem Arbeitsbereich der Trenneinrichtung 14 in eine Be- und Entladeposition 31 erstreckt, so dass das plattenförmige Material 12 von der Vorrichtung dem Auflagetisch 17, 18 entnommen und aufgelegt werden kann.

Nachdem das im Arbeitsbereich sich befindende plattenförmige Material 12 bearbeitet ist, wird dies beispielsweise durch Antrieb der Transportbänder 21 in Vorschubrichtung zur Entnahme verfahren. Das auf den Auflagetisch 17 aufgelegte plattenförmige Material 12 gelangt in den Arbeitsbereich und wird bearbeitet. Die dadurch teilweise freigewordene Arbeitsfläche 23 des Arbeitstisches 17 wird mit einem zu bearbeiteten Plattenmaterial wieder aufgefüllt. Somit kann eine kontinuierliche Bearbeitung des plattenförmigen Materials 12 ohne Stillstandszeiten der Trenneinrichtung 14 erfolgen.

Bei dieser Ausführungsform der Arbeitstische 17 und 18 ist alternativ die bewegbare Walze 24 durch einen Motor 27 angetrieben. Analog können auch die Walzen 22 und 26 oder alle Walzen durch einen Motor angetrieben sein. Die Anordnung des Motors 27 wird in Abhängigkeit des zur Verfügung stehenden Bauraumes erfolgen.

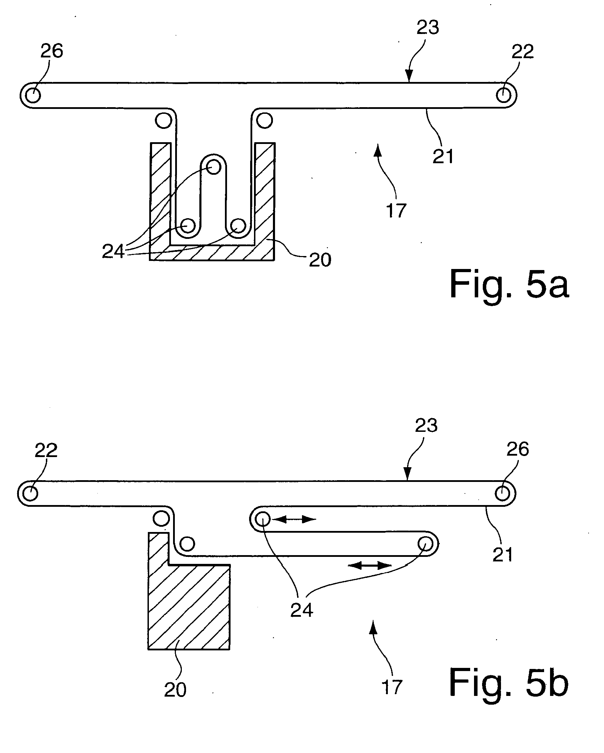

In Figur 5a ist beispielhaft eine alternative Ausgestaltung eines Auflagetisches 17,18 dargestellt. Die Walzen 22 und 26 sind in der horizontalen Ebene verschiebbar vorgesehen. Die Walzen 24 sind relativ zueinander bewegbar, um einen Längenausgleich des Transportbandes 21 bei Veränderung des Abstands der Walze 22 und 26 für die Einstellung der Größe der Auflagefläche 23 oder deren Positionierung in einer Ent- und Beladeposition 31 oder zur Veränderung der Lage des Spaltes 19 sowie der Breite des Spaltes 19 vorzunehmen. Diese Walzen 24 sind beispielsweise in vertikaler Richtung verfahrbar.

In Figur 5b ist eine alternative Ausführungsform dargestellt. Beispielsweise können die Walzen 24 zur Aufrechterhaltung der Transportbandspannung parallel zu den Walzen 22 und 26 verfahrbar sein.

Zusätzlich kann auch eine Überlagerung der Ausführungsform gemäß den Figuren 5a und 5b vorgesehen sein.

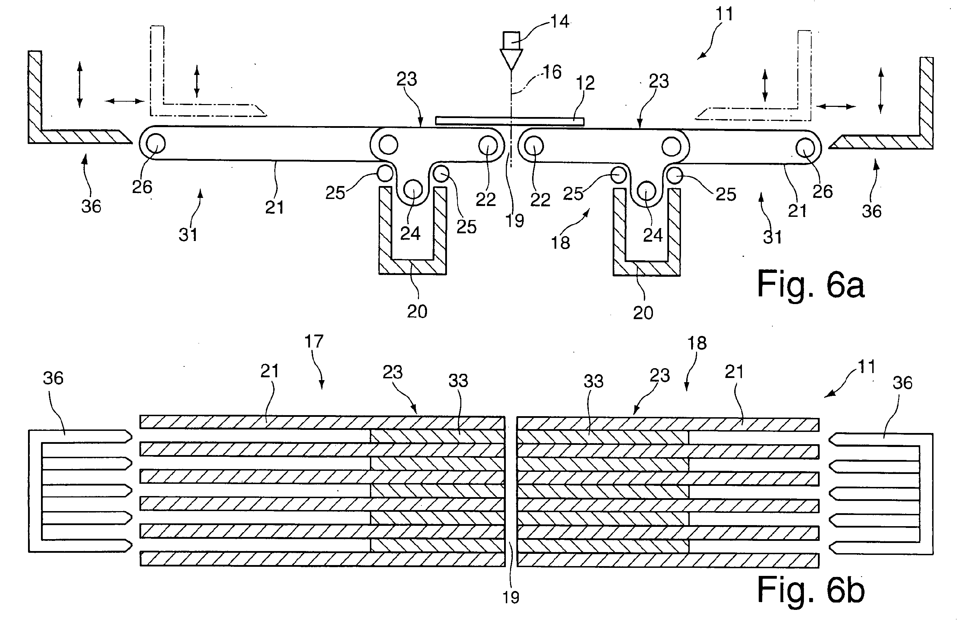

In den Figuren 6a und 6b ist eine alternative Ausführungsform der Vorrichtung 11 dargestellt. Die Auflagetische 17, 18 bestehen aus einer Vielzahl von einzelnen nebeneinander angeordneten Transportbändern 21 und Transportbändern 33, deren Auflageflächen 23 unterschiedlich groß ausgebildet sind. Eine erste Gruppe von Transportbändern 33 weist beispielsweise eine Auflagefläche 23 auf, die sich zumindest innerhalb eines Arbeitsbereiches der Trenneinrichtung 14 erstreckt. Eine zweite Gruppe von Transportbändern 21 weist eine Länge der Auflagefläche auf, die bis in eine Be- und Entladeposition 31 verfahrbar sind. Dadurch wird ermöglicht, dass zwischen den einzelnen Transportbändern 21 Freiräume geschaffen sind, durch die das Be- und Entladen des plattenförmigen Materials 12 durch eine rechen- oder gabelförmig ausgebildete Handhabungseinrichtung 36 ermöglicht ist. Diese rechenförmig ausgebildete Handhabungseinrichtung 36 kann in den Zwischenräumen der einzelnen Transportbänder 21 positioniert werden, um das Be- und Entladen zu ermöglichen.

Die Walzen 26 der Transportbänder 21 können durch eine gemeinsame Achse oder jeweils eine getrennte Achse ausgebildet sein. Die dem Spalt 19 zugeordneten Walzen 22 sind bevorzugt von einer gemeinsamen Achse aufgenommen, so dass die eine kürzere und eine längere Auflagefläche 23 bildenden Transportbänder 21, 33 im Spalt 19 gleichlaufend umgelenkt werden. Die Walzen 26 der verkürzt ausgebildeten Auflagefläche 23 können ortsfest fixiert sein oder alternativ ebenfalls verschiebbar in der Ebene parallel zur Auflagefläche 23 ausgebildet sein.

Die erfindungsgemäße Vorrichtung 11 ist nicht auf zwei Auflagetische 17, 18 beschränkt, die durch einen Spalt 19 getrennt sind. Vielmehr kann auch vorgesehen sein, dass drei oder mehrere Auflagetische 17, 18 ausgebildet sind, zwischen deren jeweiligen Auflageflächen Spalte 19 vorgesehen sind. Somit kann in einer Bearbeitungsmaschine eine Bearbeitung mit mehreren Trenneinrichtungen 14 erfolgen, wobei zumindest eine Trenneinrichtung 14 zumindest einem Spalt 19 zugeordnet ist. Ebenso kann vorgesehen sein, dass mehrere Trenneinrichtungen 14 einem Spalt 19 zugeordnet sind. Die Anzahl der Trenneinrichtungen 14 sowie deren Zuordnung zu einem und/oder mehreren Spalten 19 kann in Abhängigkeit der geforderten Bearbeitungskapazität erfolgen.

Alle vorbeschriebenen Merkmale sind jeweils für sich erfindungswesentlich und können beliebig miteinander kombiniert werden.

## Patentansprüche

1. Vorrichtung zur Aufnahme von plattenförmigen Materialien (12) für zumindest einen Trennvorgang im plattenförmigen Material (12) mit einer Trenneinrichtung (14), wobei die Trennvorrichtung (14) während eines Trennvorganges zumindest in X-Richtung bewegbar ist und quer dazu in Y-Richtung eine Vorschubrichtung des plattenförmigen Materials (12) vorgesehen ist, mit einem ersten Auflagetisch (17), der eine erste Auflagefläche (23) aufweist und zumindest einem zweiten Auflagetisch (18), der eine zweite Auflagefläche (23) aufweist, wobei jeder der Auflagetische (17, 18) ein separat angetriebenes Transportband (21) umfasst, das von mehreren Walzen (22, 24, 26) geführt ist und zwischen zumindest zwei zueinander beabstandeten und in einer Ebene liegenden Walzen (22, 26) die Auflagefläche (23) gebildet ist, wobei die Auflagefläche (23) des ersten Auflagetisches (23) und die Auflagefläche (22) des zweiten Auflagetisches (18) durch einen Spalt (19) voneinander beabstandet sind, der sich unter der Trenneinrichtung (14) befindet, **dadurch gekennzeichnet, dass** die zumindest zwei Walzen (22, 26), welche die Auflagefläche (23) des ersten und zweiten Auflagetisches (17, 18) begrenzen, unabhängig von einander in und entgegen der Y-Richtung verfahrbar sind.

2. Vorrichtung nach Anspruch 1, **dadurch gekennzeichnet, dass** zumindest eine weitere, das Transportband führende Walze (24) in einer Raumrichtung verfahrbar ist.

3. Vorrichtung nach Anspruch 2, **dadurch gekennzeichnet, dass** die zumindest eine weitere, das Transportband (21) führende Walze (24) in einer Z-Richtung und/oder in Y-Richtung verfahrbar ist.

4. Vorrichtung nach Anspruch 1 oder 2, **dadurch gekennzeichnet, dass** die zumindest eine dem Spalt (19) zugeordnete Walze (22) des ersten Auflagetisches (17) und die zumindest eine dem Spalt (19) zugeordnete Walze (22) des zweiten Auflagetisches (18) zur Einstellung einer Spaltbreite (19) relativ zueinander verfahrbar sind.

5. Vorrichtung nach einem der vorhergehenden Ansprüche, **dadurch gekennzeichnet, dass** eine Position des zwischen dem ersten und zweiten Auflagetisch (17, 18) gebildeten Spaltes (19) innerhalb eines Arbeitsbereiches der Trenneinrichtung (14), insbesondere zur Lage der Trenneinrichtung (14), einstellbar ist.

6. Vorrichtung nach einem der vorhergehenden Ansprüche, **dadurch gekennzeichnet, dass** zumindest zum Be-oder Entladen eines plattenförmigen Materials (12) zumindest eine Walze (26) der Auflagefläche (23) des ersten und des zweiten Auflagetisches (17, 18), welche der zumindest einen, dem Spalt (19) zugeordneten Walze (22) des Auflagetisches (17, 18) gegenüberliegt, unabhängig von der zumindest einen dem Spalt (19) zugewandten Walze (22) in zumindest eine Be- oder Entladeposition (31) verfahrbar ist.

7. Vorrichtung nach einem der vorhergehenden Ansprüche, **dadurch gekennzeichnet, dass** während der Bearbeitung des plattenförmigen Materials (12) der Spalt (19) unterhalb der Trenneinrichtung (14) durch Verfahren der dem Spalt (19) zugeordneten Walzen (22) bei im Arbeitsbereich der Trenneinrichtung (14) ruhendem plattenförmigen Materials (12) vorgesehen ist.

8. Vorrichtung nach einem der vorhergehenden Ansprüche, **dadurch gekennzeichnet, dass** während der Bearbeitung des plattenförmigen Materials (12) das Transportband (21) vom ersten und zweiten Arbeitstisch (17, 18) in oder entgegen der Y-Richtung rotierend angetrieben ist.

9. Vorrichtung nach einem der vorhergehenden Ansprüche, **dadurch gekennzeichnet, dass** der erste und zumindest eine zweite Auflagetisch (17, 18) eine Vielzahl von parallel zueinander angeordneten einzelnen Transportbändern (21) aufweist.

10. Vorrichtung nach Anspruch 9, **dadurch gekennzeichnet, dass** die einzelnen Transportbänder (21) eines Auflagetisches (17, 18) zueinander beabstandet sind.

11. Vorrichtung nach Anspruch 9 oder 10, **dadurch gekennzeichnet, dass** zwischen dem einen Auflagetisch (17, 18) bildenden einzelnen Transportbändern (21) dazwischen liegende Transportbänder (33) vorgesehen sind, die eine Auflagefläche (33) umfassen, die sich zumindest innerhalb eines Arbeitsbereiches der Trenneinrichtung (14) erstreckt.

12. Vorrichtung nach einem der vorhergehenden Ansprüche, **dadurch gekennzeichnet, dass** eine verfahrbare Walze (22, 24, 26) des Arbeitstisches (17, 18) von einem Motor (27) angetrieben ist.

13. Vorrichtung nach einem der Ansprüche 1 bis 8, **dadurch gekennzeichnet, dass** eine zum Auflagetisch (17, 18) ortsfeste Umlenkwalze (25) vorgesehen ist, die von einem Motor (27) angetrieben ist und das Transportband (21) antreibt.
